# FASCICULE DE BREVET EUROPEEN

(11) **EP 2 861 472 B1**
(45) Date de publication et mention de la délivrance du brevet: **16.12.2020**
(21) Numéro de dépôt: 13737318.9
(22) Date de dépôt: 14.06.2013
(51) Int. Cl.: B60S 1/52, B60S 1/38

(54) **BALAI D'ESSUYAGE A CONNECTEUR HYDRAULIQUE**
WISCHERBLATT MIT EINEM HYDRAULIKANSCHLUSS
WIPER BLADE HAVING A HYDRAULIC CONNECTOR

(30) Priorité: 14.06.2012 FR 1255569
(43) Date de publication de la demande: 22.04.2015
(73) Titulaire: Valeo Systèmes d'Essuyage, 78322 Le Mesnil Saint Denis (FR)
(72) Inventeur: TREBOUET, Marcel, 78450 Chavenay (FR)
(74) Mandataire: Valeo Vision
(86) Numéro de dépôt international: PCT/FR2013/051398
(87) Numéro de publication internationale: WO 2013/186503

(56) Documents cités:
- EP-A1- 1 918 167
- EP-A1- 2 707 257
- DE-A1-102007 062 304
- US-A1- 2009 172 907
- US-A1- 2011 185 531

## Description

Le domaine de la présente invention est celui des équipements pour les véhicules, et plus particulièrement celui des équipements pour l'essuyage des vitres des automobiles. La présente invention vise un balai d'essuyage apte à essuyer une vitre arrière ou un pare-brise d'une telle automobile.

Le document DE102007062304 A1 décrit un balai d'essuyage avec un connecteur mécanique et un connecteur hydraulique distincts.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace. Ces deux pièces sont reliées l'une à l'autre par un axe transversal qui autorise leur rotation relative, dans un plan perpendiculaire au pare-brise passant par le bras.

Ce système d'essuie-glace peut également être équipé de dispositif d'amenée d'un liquide lave-vitre qui est acheminé depuis un réservoir situé sur le véhicule et qui est projeté en direction du pare-brise par des buses situées soit autour du pare-brise, soit sur le balai d'essuyage lui-même. On comprend ici qu'il existe au moins deux modes de projection de ce liquide, ces modes de projection se traduisant sur les balais d'essuyage concernés par des solutions techniques différentes. Il s'agit là d'un premier inconvénient, en raison du fait que ces solutions techniques forment des limites à une standardisation dans la fabrication de ces balais d'essuyage. A titre d'exemple illustratif de cet inconvénient, on constate qu'il existe des connecteurs mécaniques de structure identique, dont la seule différence est la présence de conduit de circulation du liquide. Une telle différence impose néanmoins l'utilisation de deux moules distincts, et génère une logistique lourde, puisqu'il est nécessaire de gérer deux références de pièces.

Un autre inconvénient réside dans le fait que les balais d'essuyage, équipés de buses de projection et utilisés dans un système d'essuyage où le déplacement des deux bras porteurs des balais suit un même sens, ne sont pas compatibles avec un système d'essuyage de type papillon, où le déplacement des deux bras suit des sens antagonistes.

Le but de la présente invention est donc de résoudre les inconvénients décrits ci-dessus principalement en prévoyant un connecteur hydraulique adaptable aisément sur le balai d'essuyage et indépendant du connecteur mécanique, un tel connecteur hydraulique permettant ainsi de distribuer le liquide de lavage à une ou plusieurs rampes de projection installées sur le balai d'essuyage.

L'invention a donc pour objet un balai d'essuyage pour véhicule automobile, comprenant au moins une lame d'essuyage solidaire d'au moins un dispositif de rigidification de la lame d'essuyage et sur lequel est fixé au moins un connecteur mécanique apte à relier le balai d'essuyage à un bras, le balai d'essuyage comprenant au moins un élément dans lequel est ménagé au moins un conduit apte à canaliser un liquide et un connecteur hydraulique en communication au moins avec le conduit et immédiatement adjacent au connecteur mécanique, caractérisé par le fait que le connecteur hydraulique comprend au moins un moyen de solidarisation en prise au moins sur le dispositif de rigidification. Un tel balai peut ainsi être fabriqué à partir de composants standards et sur lequel on peut installer le connecteur hydraulique pour que le balai d'essuyage ainsi formé offre une fonction de projection du liquide de lavage du pare-brise.

L'invention fournit ainsi une solution technique qui permet de fabriquer un balai d'essuyage plat avec dispositif de projection intégré à partir d'un balai d'essuyage plat standard, c'est-à-dire initialement prévu pour être dépourvu de dispositif de projection intégré.

Le dispositif de rigidification selon l'invention est formé par une lame métallique qui s'étend le long du balai d'essuyage. Une telle lame métallique contraint le balai d'essuyage à prendre un profil concave quand celui-ci n'est pas en appui contre une surface sensiblement plane, par exemple le pare-brise du véhicule. Le dispositif de rigidification rigidifie ainsi le balai lorsque celui-ci est en contact avec le pare-brise afin de répartir uniformément, sur la longueur du balai, la pression de contact du balai sur le pare-brise.

Selon une première caractéristique de l'invention, le connecteur hydraulique comprend une portion dans laquelle est ménagé un canal de circulation du liquide raccordé au conduit, le moyen de solidarisation étant formé par au moins une première branche issue de la portion. Selon une option offerte par l'invention, la première branche est issue d'une première extrémité longitudinale de la portion.

Selon une deuxième caractéristique de l'invention, le moyen de solidarisation comprend une deuxième branche distincte de la première branche et issue de la portion. Cette deuxième branche est issue notamment d'une deuxième extrémité longitudinale de la portion, opposée à la première extrémité longitudinale.

Selon un exemple de réalisation, le canal ménagé dans la portion s'étend selon une direction longitudinale, par exemple rectiligne, la première branche et/ou la deuxième branche s'étendant chacune selon une direction concourante et distincte à la direction longitudinale du canal. Dans un tel cas, la direction d'extension de la première branche et/ou de la deuxième branche peut être orthogonale à la direction longitudinale du canal.

Selon une caractéristique de l'invention, la portion, la première branche et la deuxième branche délimitent un évidement dans lequel s'étend tout ou partie du connecteur mécanique. On comprend ici que le connecteur hydraulique vient entourer le connecteur mécanique sur trois côtés de ce dernier.

Selon une autre caractéristique de l'invention, la première branche et/ou la deuxième branche comprennent un dispositif d'accrochage sur le dispositif de rigidification. Dans une telle situation, le dispositif d'accrochage peut comprendre une première rainure dans laquelle se loge une première tranche du dispositif de rigidification.

En complément, le dispositif d'accrochage peut comprendre une deuxième rainure disposée sur la branche de manière opposée à la première rainure, une deuxième tranche du dispositif de rigidification étant logée dans cette deuxième rainure.

On notera que le connecteur hydraulique et le moyen de solidarisation forment une pièce unitaire issue d'une même matière, ladite matière étant choisie pour autoriser une déformation élastique du moyen de solidarisation lors de la mise en prise de celui-ci sur le dispositif de rigidification.

Le connecteur hydraulique et le connecteur mécanique sont des pièces distinctes, bien qu'installées immédiatement adjacentes l'une à l'autre, c'est-à-dire que le connecteur hydraulique s'étend de part et d'autre du connecteur mécanique selon un axe longitudinal du balai.

Selon un exemple de l'invention, le connecteur hydraulique comprend un dispositif d'admission du liquide.

Le dispositif d'admission comprend au moins deux tubulures distinctes qui s'étendent selon des axes concourants, par exemple en un unique point. Selon un autre exemple, ces axes des tubulures sont confondus.

On notera que le connecteur hydraulique peut présenter une forme symétrique par rapport à un plan de symétrie passant par le dispositif d'admission du liquide, un tel plan étant perpendiculaire à une direction d'extension d'un canal ménagé dans une portion constitutive du connecteur hydraulique.

Selon un exemple de réalisation, le connecteur hydraulique peut comprendre un moyen de protection recouvrant le dispositif d'admission du liquide. Le recouvrement du dispositif d'admission par le moyen de protection peut être opéré selon au moins deux directions, par des zones du moyen de protection aménagées à cet effet.

Dans un tel cas, le moyen de protection comprend au moins un clip en prise sur le dispositif d'admission du liquide. Ce clip permet un montage rapide du moyen de protection sur le dispositif d'admission.

En complément, le moyen de protection peut être porteur d'un indicateur d'usure du balai d'essuyage.

L'invention vise enfin un ensemble d'essuyage comprenant un balai d'essuyage comprenant l'une quelconque des caractéristiques présentées ci-dessus, un tube d'amenée de liquide et un bras porteur dudit balai d'essuyage.

De préférence, l'élément dans lequel est ménagé le conduit apte à canaliser un liquide est un accessoire de type déflecteur aérodynamique qui a pour effet d'accroître la force de plaquage du balai sur le pare-brise et ainsi d'améliorer la qualité de l'essuyage.

Un tout premier avantage selon l'invention réside dans la possibilité de standardiser la fabrication d'un maximum de pièces utilisables pour un balai d'essuyage dépourvu de dispositif de projection et pour un balai d'essuyage destiné à recevoir un dispositif de projection. En particulier, le connecteur mécanique est identique pour ces deux types de balai d'essuyage. Par ailleurs, le connecteur hydraulique étant indépendant du connecteur mécanique, il est ainsi possible d'utiliser un même connecteur hydraulique pour des balais d'essuyage équipés de connecteur mécanique présentant une structure différente.

Un autre avantage réside dans la possibilité de monter le connecteur hydraulique sur le balai d'essuyage indifféremment d'un côté ou de l'autre du connecteur mécanique, de manière à utiliser une même structure de balai d'essuyage, en particulier le connecteur mécanique, pour un mouvement des bras dans un même sens ou pour un mouvement antagoniste de ces bras porteurs des balais d'essuyage.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un ensemble d'essuyage pour un vitrage d'un véhicule automobile,
- la figure 2 est une vue partielle et en perspective d'un balai d'essuyage selon l'invention,
- la figure 3 est une vue de détails en perspective du connecteur hydraulique installé sur le balai d'essuyage selon l'invention,
- la figure 4 est une vue en coupe transversal du balai d'essuyage selon l'invention, passant par le moyen de solidarisation,
- la figure 5 est une vue partielle en perspective d'une variante du balai d'essuyage selon l'invention,
- la figure 6 est une vue partielle en perspective illustrant une phase d'assemblage du connecteur hydraulique sur le balai d'essuyage selon l'invention.

Dans la suite de la description, les dénominations longitudinales ou latérales se réfèrent à l'orientation du balai d'essuyage selon l'invention. La direction longitudinale correspond à l'axe principal du balai d'essuayge dans lequel il s'étend, alors que les orientations latérales correspondent à des droites concourantes, c'est-à-dire qui croisent la direction longitudinale, notamment perpendiculaires à l'axe longitudinal du balai d'essuyage dans son plan de rotation. Pour les directions longitudinales, les dénominations extérieure ou intérieure s'apprécient par rapport au point de fixation du balai sur le bras, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

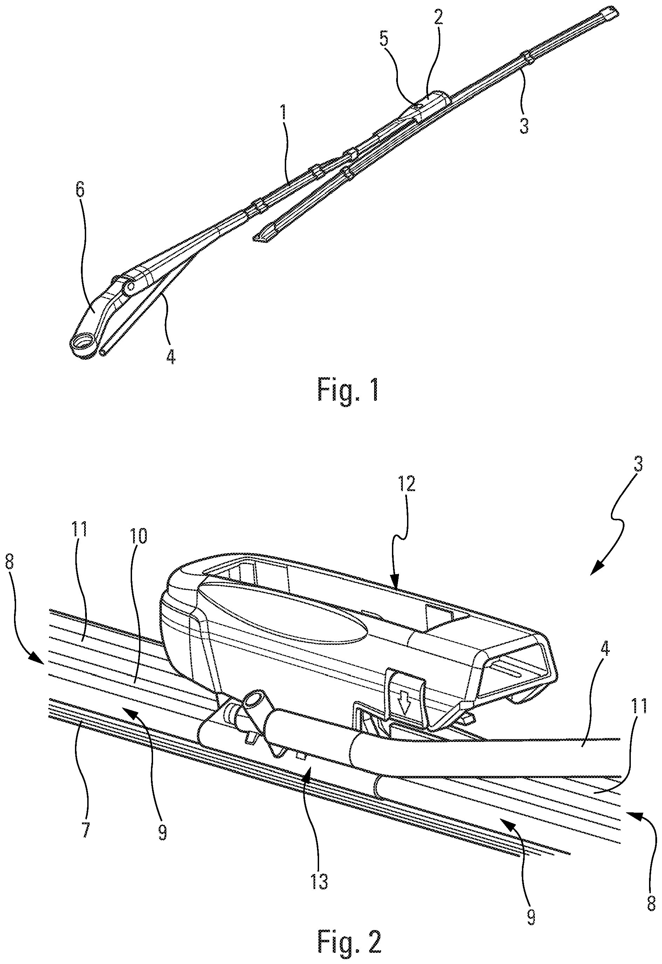

En se référant tout d'abord à la figure 1, on voit un ensemble d'essuyage composé d'un porte-balai ou bras 1 se prolongeant à son extrémité extérieure par une pièce terminale 2, qui est fixée, du côté intérieur, par un sertissage sur le bras 1. La pièce terminale 2 coopère avec un adaptateur porteur d'un balai d'essuyage 3 par l'intermédiaire d'un connecteur mécanique. L'adaptateur a vocation à, par exemple, s'insérer dans la pièce terminale 2 par un mouvement de translation selon un axe longitudinal, pour venir dans la position d'utilisation, où il est positionné en butée contre une forme coopérante donnée à la pièce terminale 2. Il y est alors fixé de façon réversible au moyen, par exemple, d'un premier bouton escamotable de verrouillage 5, qui est fixé en extrémité d'une première languette flexible issue de l'adaptateur et qui coopère avec un évidement pratiqué à cet effet dans la partie supérieure de la pièce terminale 2.

Un tube 4 d'amenée de liquide court le long du bras 1. Ce tube 4 canalise un liquide de lavage du pare-brise pour l'amener au niveau d'une zone de connexion entre le bras 1 et le balai d'essuyage 3.

A l'extrémité opposée à la pièce terminale 2 par rapport au bras 1, on trouve un entraîneur 6 pourvu d'un trou au travers duquel un arbre d'un moteur d'entraînement ou d'une tringlerie passe en vue de mettre en rotation l'ensemble d'essuyage.

En se référant maintenant à la figure 2, on voit plus précisément la zone de connexion entre le balai d'essuyage 3 et le bras chargé d'entraîner celui-ci en rotation. Une telle connexion est assuré au moins en partie par un adaptateur 12 et un connecteur mécanique, invisible sur cette figure car logé dans l'adaptateur 12.

Le balai d'essuyage 3 comprend une lame d'essuyage 7, autrement appelée raclette, qui s'étend longitudinalement le long du balai d'essuyage 3. Cette dernière est un composant souple du balai d'essuyage 3 en appui contre la face extérieure du pare-brise à essuyer.

Le balai d'essuyage 3 comprend encore au moins un élément 8 dans lequel est ménagé au moins un conduit 9 apte à canaliser le liquide de lavage du pare-brise. Selon l'exemple de réalisation illustré sur la figure 2, l'élément 8 est un déflecteur d'air 10 qui coiffe une partie supérieure du balai d'essuyage 3, un tel déflecteur d'air 10 étant notamment muni d'une aube déflectrice 11 agencée pour utiliser l'effet dynamique du déplacement du véhicule pour augmenter la force d'appui du balai d'essuyage 3 sur le pare-brise.

On remarque sur cette figure que le balai d'essuyage 3 est pourvu de deux éléments 8 distincts enfilés sur le balai d'essuyage 3 de part et d'autre de la zone de connexion du balai d'essuyage 3 avec son bras. A titre d'exemple de réalisation, les deux éléments 8 présentent une structure identique à celle décrite ci-dessus, c'est-à-dire délimitant au moins un conduit 9 et présentant au moins une aube déflectrice 11.

Le balai d'essuyage 3 représenté sur la figure 2 comprend encore l'adaptateur 12 dont la fonction est de réaliser un lien mécanique entre l'extrémité du bras et le connecteur mécanique. On notera que la forme de cet adaptateur 12 est variable en fonction de la forme du connecteur mécanique et de la forme de l'extrémité du bras. Un tel adaptateur 12 est par conséquent une pièce dont la structure peut être modifiée en fonction de la forme de l'extrémité du bras, par exemple une extrémité rectiligne, en forme de crochet ou présentant un doigt de basculement et une ou plusieurs pattes de solidarisation.

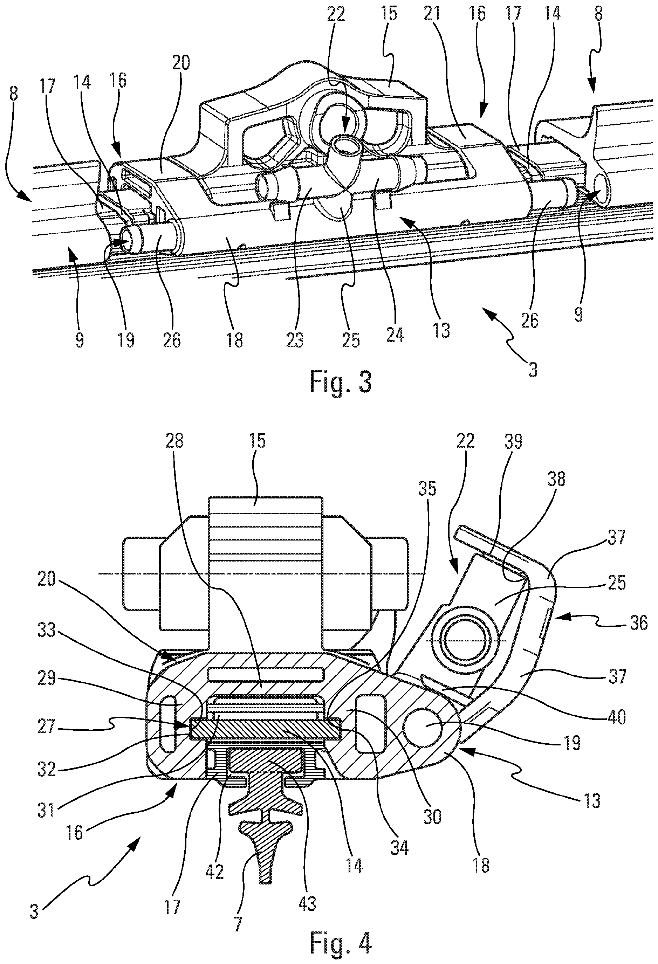

Le balai d'essuyage 3 comprend également un dispositif de rigidification de la lame d'essuyage 7 qui sera abordé plus en détails à la description à venir en référence aux figures 3 et 4.

Le balai d'essuyage 3 comprend encore un connecteur hydraulique 13. Ce dernier est qualifié d'hydraulique en ce sens que sa fonction est de canaliser et de distribuer le liquide de lavage en provenance du tube 4 d'amenée de liquide vers le ou les conduits 9. C'est ainsi que ce connecteur hydraulique 13 est en communication au moins avec un des conduits 9. Ce connecteur hydraulique 13 est aussi en communication avec le tube 4 d'amenée de liquide.

Selon cet exemple de réalisation, le connecteur hydraulique 13 est interposé entre les deux éléments 8 enfilés sur le balai d'essuyage 3.

Selon l'invention, le connecteur hydraulique 13 est solidaire du balai d'essuyage 3 par une prise mécanique assurée sur le dispositif de rigidification.

La figure 3 montre la disposition du connecteur hydraulique 13 vis-à-vis de ce dispositif de rigidification 14 et vis-à-vis du connecteur mécanique 15. Pour faciliter la compréhension, les deux éléments 8 ont été translatés longitudinalement de manière à désaccoupler le connecteur hydraulique 13 des conduits 9 ménagés dans les éléments 8. Cette translation permet de visualiser un autre composant de la structure du balai d'essuyage 3. Il s'agit d'un support 17 qui entoure le dispositif de rigidification 14 et qui s'étend le long de balai d'essuyage 3, à l'exception d'une zone de fixation du connecteur mécanique 15 et d'une ou plusieurs zones où le connecteur hydraulique 13 est en prise sur le dispositif de rigidification 14. Le support 17 est ainsi ajouré en regard d'une première branche 20 du connecteur hydraulique 13 et d'une deuxième branche 21 du connecteur hydraulique 13 afin de permettre à un dispositif d'accrochage 27 du connecteur hydraulique 13 de venir en prise sur le dispositif de rigidification 14.

Le connecteur hydraulique 13 est immédiatement adjacent au connecteur mécanique 15. Par immédiatement adjacent, on comprend que le connecteur hydraulique 13 s'étend au moins en partie au niveau de la zone de connexion entre le balai d'essuyage 3 et le bras qui le porte. C'est ainsi que le connecteur hydraulique 13 est placé à côté du connecteur mécanique 15, par exemple sans autre pièce disposée entre ces deux composants.

Le connecteur hydraulique 13 comprend un moyen de solidarisation 16 du connecteur hydraulique 13 sur le dispositif de rigidification 14. Cette solidarisation mécanique est assurée par une prise mécanique du moyen de solidarisation 16 sur le dispositif de rigidification 14.

Le connecteur hydraulique 13 est formé par une portion 18, par exemple rectiligne, à l'intérieur de laquelle est ménagé un canal 19 de circulation du liquide de lavage. Quand le connecteur hydraulique 13 est installé sur le balai d'essuyage 3, cette portion 18 et le canal 19 s'étendent longitudinalement et sont localisés latéralement par rapport connecteur mécanique 15. En d'autres termes, cette portion 18 s'étend sur le côté du balai d'essuyage 3. Le canal 19 est en communication avec le conduit 9 de chaque élément 8, assurant ainsi une distribution du liquide le long du balai d'essuyage 3 en vue de sa projection sur le pare-brise par des moyens dédiés à cet effet.

Selon un exemple de réalisation, la portion 18 est pourvue de deux manchons 26 qui débouchent chacun d'une extrémité longitudinale de la portion 18. De tels manchons 26 prolongent le canal 19 de la portion 18 et se logent dans le conduit 9 de chaque élément 8.

Le moyen de solidarisation 16 est par exemple formé par une première branche 20 qui prend naissance sur la portion 18, avantageusement à une extrémité longitudinale de cette dernière. Alors que la portion 18 et le canal 19 s'étendent selon une direction longitudinale, par exemple parallèle à la direction d'extension longitudinale du balai d'essuyage 3, la première branche 20 s'étend globalement selon une direction concourante et distincte à cette direction longitudinale de la portion 18. Selon un exemple particulier représenté sur la figure 3, la direction d'extension de la première branche 20 est orthogonale à la direction longitudinale de la portion 18. Cette première branche 20 couvre ainsi une partie supérieure du dispositif de rigidification 14, la première branche 20 étant notamment immédiatement adjacente au connecteur mécanique 15. On notera que la solidarisation du connecteur hydraulique 13 sur le dispositif de rigidification peut être assurée uniquement par la première branche 20.

La première branche 20 est issue de matière avec la portion 18, c'est-à-dire réalisée de manière unitaire avec ladite portion et selon une même étape de moulage.

Selon un exemple de réalisation complémentaire, le moyen de solidarisation 16 peut comprendre une deuxième branche 21 distincte de la première branche 20. Cette deuxième branche 21 prend naissance sur la portion 18, avantageusement à une extrémité longitudinale de cette portion 18 opposée à l'extrémité longitudinale sur laquelle prend naissance la première branche 20. Alors que la portion 18 et le canal 19 s'étendent selon la direction longitudinale, par exemple parallèle à la direction d'extension longitudinale du balai d'essuyage 3, la deuxième branche 21 s'étend globalement selon une direction concourante et distincte à cette direction longitudinale de la portion 18. Selon un exemple particulier représenté sur la figure 3, la direction d'extension de la deuxième branche 21 est orthogonale à la direction longitudinale de la portion 18. Comme la première branche 20, cette deuxième branche 21 couvre ainsi une partie supérieure du dispositif de rigidification 14, la première branche 20 et la deuxième branche 21 étant alors placées de part et d'autre du connecteur mécanique 15 selon la direction longitudinale du balai d'essuyage 3, et par exemple immédiatement adjacentes à celui-ci.

Muni de ses deux branches, le connecteur hydraulique 13 présente ainsi une forme en « U », vu selon une direction perpendiculaire à un plan passant par la première branche 20, la portion 18 et la deuxième branche 21. Selon cet exemple de réalisation, le moyen de solidarisation 16 comprend alors la première branche 20 et la deuxième branche 21. La forme en « U » du connecteur hydraulique 13 permet de générer un évidement dans lequel s'étend au moins une partie du connecteur mécanique 15, et avantageusement l'intégralité de celui-ci au moins selon la direction longitudinale du balai d'essuyage 3.

Le connecteur hydraulique 13 comprend encore un dispositif d'admission 22 du liquide de lavage du pare-brise. Ce dispositif d'admission 22 est un composant raccordé d'un coté au canal 19 formé dans la portion 18 et de l'autre au tube d'amenée du liquide qui longe le bras de l'ensemble d'essuyage.

Un tel dispositif d'admission 22 comprend au moins une première tubulure 23 et une deuxième tubulure 24 par lequel le liquide peut entrer dans le dispositif d'admission 22. Ces deux tubulures 23 et 24 délimitent chacune un canal qui s'étend selon des axes concourants, notamment confondus. Dans l'exemple particulier de la figure 3, ces axes confondus sont parallèles et distincts de la direction longitudinale d'extension de la portion 18.

Ces deux tubulures 23 et 24 sont mises en communication avec le canal 19 par un puits 25, autorisant ainsi une circulation du liquide de lavage depuis l'une ou l'autre des tubulures vers le canal 19 de la portion 18.

La disposition opposée de la première tubulure 23 par rapport à la deuxième tubulure 24 offre la possibilité de placer connecteur hydraulique 13 d'un côté ou de l'autre du connecteur mécanique 15, tout en l'alimentant en liquide par le tube d'amenée de liquide dont la position le long du bras porteur du balai d'essuyage est inchangée quelle que soit la position du connecteur hydraulique 13 vis-à-vis du connecteur mécanique 15.

Une fois la position du connecteur hydraulique 13 choisie, la tubulure qui ne reçoit pas le tube d'amenée de liquide est obturée, par exemple au moyen d'un obturateur logé dans le canal de la tubulure concernée, un tel obturateur pouvant par exemple prendre la forme d'une bille.

Le puits 25 est également obturé au niveau de sa partie débouchante au moyen d'un obturateur de forme identique à celui décrit ci-dessus employé pour fermer la tubulure dépourvue du tube d'amenée de liquide.

Selon un exemple de réalisation, le dispositif d'admission 22 est issu de la portion 18 à égale distance des extrémités longitudinales de cette portion 18. On comprend ainsi que le connecteur hydraulique 13 présente une forme symétrique qui lui permet d'être positionné d'un côté ou de l'autre du connecteur mécanique 15, en prise sur le dispositif de rigidification 14. Cette symétrie est opérée par rapport à un plan perpendiculaire à la direction longitudinale d'extension de la portion 18 et passant au centre du dispositif d'admission 22 de liquide, notamment passant par le centre du puits 25.

La figure 4 montre le balai d'essuyage 3 en coupe transversale passant par la première branche 20. Cette figure permet de matérialiser la structure du moyen de solidarisation 16, en illustrant la présence d'un dispositif d'accrochage 27 formé sur la première branche 20 et/ou la deuxième branche, assurant la prise sur le dispositif de rigidification 14.

La première branche 20 et/ou la deuxième branche présentent une forme en « U » en observant un plan de coupe perpendiculaire à la direction longitudinale de la portion 18 et passant par la branche concernée. La première branche 20 et/ou la deuxième branche présentent ainsi un flanc central 28 bordé par un premier flanc latéral 29 et un deuxième flanc latéral 30, ce dernier étant par exemple réalisé attenant à la portion 18, et dans le prolongement de cette dernière.

La forme en « U » de ces branches 20, 21 permet de délimiter une cavité 31 dans laquelle se loge au moins le dispositif de rigidification 14. Cette cavité 31 comprend ainsi une face interne au moins en partie en contact physique avec le dispositif de rigidification 14.

La prise de la première branche 20 et/ou de la deuxième branche sur ce dispositif de rigidification 14 est assurée par au moins une première rainure 32 ménagée dans le premier flanc latéral 29, débouchant au niveau de la face interne. Cette première rainure 32 est agencée pour qu'une première tranche 33 du dispositif de rigidification 14 s'y loge, assurant ainsi un blocage du connecteur hydraulique 13 vis-à-vis du balai d'essuyage 3.

Le dispositif d'accrochage 27 peut être complété par une deuxième rainure 34 ménagée au niveau du deuxième flanc latéral 30. Une telle deuxième rainure 34 présente une forme identique à la première rainure 32 et est disposée sur le deuxième flanc latéral 30 de manière opposée à la première rainure 32. La deuxième rainure 34 fait ainsi face à la première rainure 32.

Cette deuxième rainure 34 reçoit une deuxième tranche 35 du dispositif de rigidification 14, opposée à la première tranche 33. Le dispositif de rigidification 14 est ainsi pris en sandwich entre les deux flancs latéraux 29 et 30, et maintenu en place par la première rainure 32 et/ou la deuxième rainure 34.

Selon un exemple de réalisation, le connecteur hydraulique 13 et le moyen de solidarisation 16 forment une pièce unitaire de même matière, par exemple fabriquée simultanément pendant une même opération de moulage du connecteur hydraulique 13. La mise en prise du connecteur hydraulique 13 sur le dispositif de rigidification 14 est assurée par une déformation élastique des branches 20, 21, notamment du flanc central 28 et du premier flanc latéral 29. Les branches 20, 21 subissent alors une flexion lors de la mise en prise du connecteur hydraulique 13 sur le dispositif de rigidification 14, puis reprennent leur forme initiale lorsque les tranches 33 et 35 de ce dispositif de rigidification 14 sont logées dans les rainures concernées.

La coupe de la figure 4 montre bien la présence du canal 19 formé dans la portion 18, ainsi que le dispositif d'admission 22 du liquide. On notera que ce dernier est incliné sur le côté de manière à éviter toute interférence avec le connecteur mécanique 15. La direction passant par le centre du puits 25 croise la direction longitudinale d'extension du canal 19, la direction centrale du puits 25 ayant subit une rotation dans le sens horaire d'une valeur comprise entre 10° et 90° par rapport à un plan passant par la direction longitudinale d'extension du canal 19 et perpendiculaire à un plan d'extension du dispositif de rigidification 14.

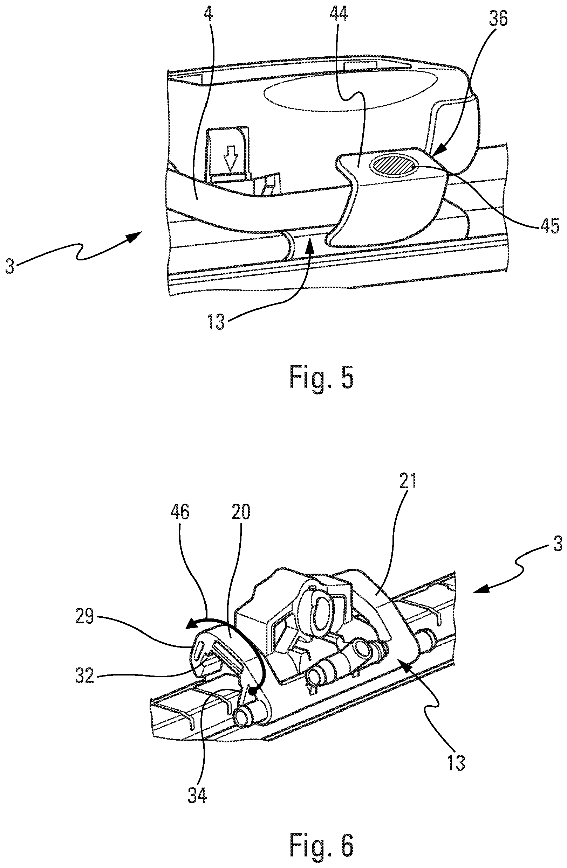

Le connecteur hydraulique 13 peut encore comporter un moyen de protection 36 recouvrant le dispositif d'admission 22 du liquide. Ce moyen de protection 36 est agencé pour remplir plusieurs fonctions. Une première fonction est esthétique, le moyen de protection 36 venant cacher les formes du dispositif d'admission 22. Une deuxième fonction consiste en une protection passive des piétons en cas de choc avec le véhicule, puisque le moyen de protection 36 comporte des formes arrondies 37 qui recouvrent des arêtes anguleuses 38 que le dispositif d'admission 36 présente. Une troisième fonction réside dans la possibilité d'obturer le puits 25 au moyen d'un obturateur 39 issu de matière avec le moyen de protection 36. Enfin, ce moyen de protection peut mettre en œuvre une quatrième fonction en formant un support pour un logo et/ou un indicateur d'usure du balai d'essuyage 3, comme cela sera détaillé à la figure 5.

Le moyen de protection 36 est rapporté sur le dispositif d'admission 22 en liquide. Il est par exemple solidarisé sur celui-ci au moyen d'un clip 40 formé par deux bras entre lesquels un logement de forme complémentaire au puits 25 est ménagé. La solidarisation peut également être complétée par un positionnement de l'obturateur 39 dans le canal délimité par le puits 25.

Le balai d'essuyage 3 comprend encore le support 17 qui s'étend longitudinalement le long du balai d'essuyage 3. A l'intérieur de ce support 17 est logé au moins le dispositif de rigidification 14, ce dernier prenant par exemple la forme d'une lame métallique plate. Le support 17 est notamment une pièce en plastique dans laquelle est ménagée une cavité centrale qui reçoit la lame métallique, cette dernière étant configuré pour contraindre le balai d'essuyage 3 à suivre un profil concave quand il n'est pas appliqué contre le pare-brise.

Alternativement, le balai d'essuyage peut comprendre deux vertèbres de rigidification. Dans ce cas, qui ne fait pas partie de l'invention, les deux vertèbres sont rendues solidaires de la lame d'essuyage constitutive du balai d'essuyage et ce dernier est alors dépourvu de support. La lame d'essuyage peut être pourvu de deux fentes ouvertes le long du balai d'essuyage et disposées latéralement sur celle-ci, ces deux fentes recevant chacune une vertèbre de rigidification.

Le support 17 comprend encore un logement longitudinal 42 dans lequel est enfilée la lame d'essuyage 7. Cette dernière comprend un talon 43 qui s'étend dans le logement longitudinal 42, ce talon 43 étant maintenu entre deux flancs constitutifs du support 17 et qui entourent le talon 43.

La figure 5 montre le connecteur hydraulique 13 installé sur le balai d'essuyage 3 selon l'invention, dont seule la zone de connexion avec le bras est visible sur cette figure. Une comparaison de cette figure 5 avec la figure 2 permet de matérialiser la faculté du connecteur hydraulique 13 d'être installé d'un côté (figure 2) ou de l'autre (figure 5) d'une même zone de connexion du balai d'essuyage sur son bras.

Le moyen de protection 36 cache le dispositif d'admission de liquide. Ce moyen de protection 36 comprend une zone plate 44 sur laquelle peut être disposé un indicateur 45 d'usure du balai d'essuyage 3, un tel indicateur étant agencé pour avertir l'utilisateur du véhicule que la durée de vie du balai d'essuyage est expirée.

La figure 6 illustre une phase d'assemblage du connecteur hydraulique 13

## Revendications

1. Balai d'essuyage (3) pour véhicule automobile, comprenant au moins une lame d'essuyage (7) solidaire d'au moins un dispositif de rigidification (14) de la lame d'essuyage (7) et sur lequel est fixé au moins un connecteur mécanique (15) apte à relier le balai d'essuyage (3) à un bras (1), ledit dispositif de rigidification (14) est formé par une lame métallique s'étendant le long du balai d'essuyage (3), le balai d'essuyage (3) comprenant au moins un élément (8) dans lequel est ménagé au moins un conduit (9) apte à canaliser un liquide et un connecteur hydraulique (13) en communication au moins avec le conduit (9) et immédiatement adjacent au connecteur mécanique (15), le connecteur hydraulique (13) comprenant au moins un moyen de solidarisation (16) en prise au moins sur le dispositif de rigidification (14), le connecteur hydraulique (13) et le connecteur mécanique (15) étant des pièces distinctes, le connecteur hydraulique (13) s'étendant de part et d'autre du connecteur mécanique (15) selon un axe longitudinal du balai d'essuyage (3), le balai d'essuyage (3) comprenant au moins un support (17) logeant au moins le dispositif de rigidification (14), le support (17) étant ajouré en regard d'une première branche (20) du connecteur hydraulique (13) et d'une deuxième branche (21) du connecteur hydraulique (13) afin de permettre à un dispositif d'accrochage (27) du moyen de solidarisation (16) du connecteur hydraulique (13) de venir en prise sur le dispositif de rigidification (14).

2. Balai d'essuyage selon la revendication 1, dans lequel le connecteur hydraulique (13) comprend une portion (18) dans laquelle est ménagé un canal (19) de circulation du liquide raccordé au conduit (9), le moyen de solidarisation (16) étant formé par au moins la première branche (20) du connecteur hydraulique (13), cette première branche (20) étant issue de la portion (18).

3. Balai d'essuyage selon la revendication 2, dans lequel le moyen de solidarisation (16) comprend la deuxième branche (21) du connecteur hydraulique (13), cette deuxième branche (21) étant distincte de la première branche (20) et issue de la portion (18).

4. Balai d'essuyage selon l'une quelconque des revendications 2 ou 3, dans lequel le canal (19) ménagé dans la portion (18) s'étend selon une direction longitudinale, la première branche (20) et/ou la deuxième branche (21) s'étendant selon une direction concourante et distincte à la direction longitudinale du canal (19).

5. Balai d'essuyage selon la revendication 2, dans lequel la portion (18), la première branche (20) et la deuxième branche (21) délimitent un évidement dans lequel s'étend tout ou partie du connecteur mécanique (15).

6. Balai d'essuyage selon l'une quelconque des revendications précédentes, dans lequel le dispositif d'accrochage (27) comprend une première rainure (32) dans laquelle se loge une première tranche (33) du dispositif de rigidification (14).

7. Balai d'essuyage selon la revendication 6, dans lequel le dispositif d'accrochage (27) comprend une deuxième rainure (34) disposée sur la branche de manière opposée à la première rainure (32), une deuxième tranche (35) du dispositif de rigidification (14) étant logée dans cette deuxième rainure (34).

8. Balai d'essuyage selon l'une quelconque des revendications précédentes, dans lequel le connecteur hydraulique (13) et le moyen de solidarisation (16) forment une pièce unitaire issue d'une même matière, ladite matière étant choisie pour autoriser une déformation élastique du moyen de solidarisation (16) lors de la mise en prise de celui-ci sur le dispositif de rigidification (14).

9. Balai d'essuyage selon l'une quelconque des revendications précédentes, dans lequel le connecteur hydraulique (13) comprend un dispositif d'admission (22) du liquide.

10. Balai d'essuyage selon la revendication 9, dans lequel le dispositif d'admission (22) comprend au moins deux tubulures (23, 24) distinctes qui s'étendent selon des axes concourants.

11. Balai d'essuyage selon l'une quelconque des revendications 9 ou 10, dans lequel le connecteur hydraulique (13) présente une forme symétrique par rapport à un plan de symétrie passant par le dispositif d'admission (22) du liquide.

12. Balai d'essuyage selon l'une quelconque des revendications 9 à 11, dans lequel le connecteur hydraulique (13) comprend un moyen de protection (36) recouvrant le dispositif d'admission (22) du liquide.

13. Ensemble d'essuyage comprenant un balai d'essuyage (3) selon l'une quelconque des revendications précédentes, un tube (4) d'amenée de liquide et un bras (1) porteur dudit balai d'essuyage (3).

## Patentansprüche

1. Wischerblatt (3) für ein Kraftfahrzeug, welches wenigstens einen Wischergummi (7) umfasst, der mit wenigstens einer Vorrichtung zur Versteifung (14) des Wischergummis (7) fest verbunden ist, und auf welchem wenigstens ein mechanischer Verbinder (15) befestigt ist, der geeignet ist, das Wischerblatt (3) mit einem Arm (1) zu verbinden, wobei die Versteifungsvorrichtung (14) von einem Metallstreifen gebildet wird, der sich entlang des Wischerblattes (3) erstreckt, wobei das Wischerblatt (3) wenigstens ein Element (8), in welchem wenigstens eine Leitung (9) angeordnet ist, die geeignet ist, eine Flüssigkeit zu kanalisieren, und einen hydraulischen Verbinder (13), der wenigstens mit der Leitung (9) in Verbindung steht und dem mechanischen Verbinder (15) unmittelbar benachbart ist, umfasst, wobei der hydraulische Verbinder (13) wenigstens ein Verbindungsmittel (16) umfasst, das wenigstens an der Versteifungsvorrichtung (14) angreift, wobei der hydraulische Verbinder (13) und der mechanische Verbinder (15) verschiedene Teile sind, wobei sich der hydraulische Verbinder (13) beiderseits des mechanischen Verbinders (15) entlang einer Längsachse des Wischerblattes (3) erstreckt, wobei das Wischerblatt (3) wenigstens einen Träger (17) umfasst, der wenigstens die Versteifungsvorrichtung (14) aufnimmt, wobei der Träger (17) gegenüber einem ersten Schenkel (20) des hydraulischen Verbinders (13) und einem zweiten Schenkel (21) des hydraulischen Verbinders (13) durchbrochen ist, um zu ermöglichen, dass eine Einhängevorrichtung (27) des Verbindungsmittels (16) des hydraulischen Verbinders (13) an der Versteifungsvorrichtung (14) in Eingriff gelangt.

2. Wischerblatt nach Anspruch 1, wobei der hydraulische Verbinder (13) einen Abschnitt (18) umfasst, in welchem ein Strömungskanal (19) der Flüssigkeit ausgebildet ist, der an die Leitung (9) angeschlossen ist, wobei das Verbindungsmittel (16) von wenigstens dem ersten Schenkel (20) des hydraulischen Verbinders (13) gebildet wird, wobei dieser erste Schenkel (20) an den Abschnitt (18) angeformt ist.

3. Wischerblatt nach Anspruch 2, wobei das Verbindungsmittel (16) den zweiten Schenkel (21) des hydraulischen Verbinders (13) umfasst, wobei dieser zweite Schenkel (21) vom ersten Schenkel (20) verschieden und an den Abschnitt (18) angeformt ist.

4. Wischerblatt nach einem der Ansprüche 2 oder 3, wobei sich der im Abschnitt (18) ausgebildete Kanal (19) in einer Längsrichtung erstreckt, wobei sich der erste Schenkel (20) und/oder der zweite Schenkel (21) in einer sich mit der Längsrichtung des Kanals (19) kreuzenden und von dieser verschiedenen Richtung erstrecken.

5. Wischerblatt nach Anspruch 2, wobei der Abschnitt (18), der erste Schenkel (20) und der zweite Schenkel (21) eine Vertiefung begrenzen, in welcher sich der gesamte mechanische Verbinder (15) oder ein Teil davon erstreckt.

6. Wischerblatt nach einem der vorhergehenden Ansprüche, wobei die Einhängevorrichtung (27) eine erste Rille (32) umfasst, in welcher ein erster Teilabschnitt (33) der Versteifungsvorrichtung (14) aufgenommen ist.

7. Wischerblatt nach Anspruch 6, wobei die Einhängevorrichtung (27) eine zweite Rille (34) umfasst, die an dem Schenkel gegenüber der ersten Rille (32) angeordnet ist, wobei ein zweiter Teilabschnitt (35) der Versteifungsvorrichtung (14) in dieser zweiten Rille (34) aufgenommen ist.

8. Wischerblatt nach einem der vorhergehenden Ansprüche, wobei der hydraulische Verbinder (13) und das Verbindungsmittel (16) ein einheitliches Teil bilden, das aus demselben Material hergestellt ist, wobei dieses Material so gewählt ist, dass eine elastische Verformung des Verbindungsmittel (16) ermöglicht wird, wenn dieses an der Versteifungsvorrichtung (14) in Eingriff gebracht wird.

9. Wischerblatt nach einem der vorhergehenden Ansprüche, wobei der hydraulische Verbinder (13) eine Einlassvorrichtung (22) für die Flüssigkeit umfasst.

10. Wischerblatt nach Anspruch 9, wobei die Einlassvorrichtung (22) wenigstens zwei verschiedene Stutzen (23, 24) umfasst, welche sich entlang sich schneidender Achsen erstrecken.

11. Wischerblatt nach einem der Ansprüche 9 oder 10, wobei der hydraulische Verbinder (13) eine in Bezug auf eine durch die Einlassvorrichtung (22) für die Flüssigkeit verlaufende Symmetrieebene symmetrische Form aufweist.

12. Wischerblatt nach einem der Ansprüche 9 bis 11, wobei der hydraulische Verbinder (13) ein Schutzmittel (36) umfasst, das die Einlassvorrichtung (22) für die Flüssigkeit bedeckt.

13. Wischanordnung, welche ein Wischerblatt (3) nach einem der vorhergehenden Ansprüche, ein Rohr (4) zur Zuführung von Flüssigkeit und einen Arm (1), der das Wischerblatt (3) trägt, umfasst.

## Claims

1. Windscreen wiper (3) for a motor vehicle, which comprises at least one wiper blade (7) secured to at least one stiffening device (14) of the wiper blade (7) and to which is fixed at least one mechanical connector (15) that is able to connect the windscreen wiper (3) to an arm (1), said stiffening device (14) being formed by a metal blade extending along the windscreen wiper (3), the windscreen wiper (3) comprising at least one element (8) in which is formed at least one duct (9) that is able to channel a liquid and a hydraulic connector (13) that is in communication at least with the duct (9) and immediately adjacent to the mechanical connector (15), the hydraulic connector (13) comprising at least one securing means (16) engaged at least over the stiffening device (14), the hydraulic connector (13) and the mechanical connector (15) being separate components, the hydraulic connector (13) extending on either side of the mechanical connector (15) along a longitudinal axis of the windscreen wiper (3), the windscreen wiper (3) comprising at least one support (17) housing at least the stiffening device (14), the support (17) being perforated next to a first leg (20) of the hydraulic connector (13) and to a second leg (21) of the hydraulic connector (13) in order to allow a coupling device (27) of the securing means (16) of the hydraulic connector (13) to be engaged with the stiffening device (14).

2. Windscreen wiper according to Claim 1, wherein the hydraulic connector (13) comprises a portion (18) in which is formed a circulation channel (19) for the liquid that is connected to the duct (9), the securing means (16) being formed by at least the first leg (20) of the hydraulic connector (13), this first leg (20) being integral with the portion (18).

3. Windscreen wiper according to Claim 2, wherein the securing means (16) comprises the second leg (21) of the hydraulic connector (13), this second leg (21) being separate from the first leg (20) and integral with the portion (18).

4. Windscreen wiper according to either one of Claims 2 and 3, wherein the channel (19) formed in the portion (18) extends in a longitudinal direction, the first leg (20) and/or the second leg (21) extending in a concurrent direction different from the longitudinal direction of the channel (19).

5. Windscreen wiper according to Claim 2, wherein the portion (18), the first leg (20) and the second leg (21) delimit a gap through which all or part of the mechanical connector (15) extends.

6. Windscreen wiper according to any one of the preceding claims, wherein the coupling device (27) comprises a first slot (32) in which a first segment (33) of the stiffening device (14) is housed.

7. Windscreen wiper according to Claim 6, wherein the coupling device (27) comprises a second slot (34) disposed in the leg on the opposite side to the first slot (32), a second segment (35) of the stiffening device (14) being housed in this second slot (34).

8. Windscreen wiper according to any one of the preceding claims, wherein the hydraulic connector (13) and the securing means (16) form a single piece made from the same material, said material being chosen so as to allow elastic deformation of the securing means (16) when the latter is engaged over the stiffening device (14).

9. Windscreen wiper according to any one of the preceding claims, wherein the hydraulic connector (13) comprises a liquid inlet device (22).

10. Windscreen wiper according to Claim 9, wherein the inlet device (22) comprises at least two separate nozzles (23, 24) that extend along concurrent axes.

11. Windscreen wiper according to either one of Claims 9 and 10, wherein the hydraulic connector (13) has a symmetric shape with respect to a plane of symmetry passing through the liquid inlet device (22).

12. Windscreen wiper according to any one of Claims 9 to 11, wherein the hydraulic connector (13) comprises a protective means (36) covering the liquid inlet device (22) .

13. Wiper assembly comprising a windscreen wiper (3) according to any one of the preceding claims, a liquid feed tube (4) and an arm (1) carrying said windscreen wiper (3).
